Europäisches Patentamt

European Patent Office

Office européen des brevets

(11) Veröffentlichungsnummer : **0 085 766**
B1

# (12) EUROPÄISCHE PATENTSCHRIFT

(45) Veröffentlichungstag der Patentschrift :
05.06.85

(51) Int. Cl.⁴ : **A 01 C 15/04**

(21) Anmeldenummer : 82111052.5

(22) Anmeldetag : 30.11.82

(54) Maschine zum pneumatischen Ausbringen von körnigen Stoffen.

(30) Priorität : 22.01.82 DE 3201877

(43) Veröffentlichungstag der Anmeldung :
17.08.83 Patentblatt 83/33

(45) Bekanntmachung des Hinweises auf die Patenterteilung : 05.06.85 Patentblatt 85/23

(84) Benannte Vertragsstaaten :
AT DE FR GB IT NL

(56) Entgegenhaltungen :
DE-A- 2 755 353
FR-A- 1 427 107
US-A- 3 606 097

(73) Patentinhaber : ACCORD Landmaschinen Heinrich Weiste & Co. GmbH
Coesterweg 42
D-4770 Soest (DE)

(72) Erfinder : Weiste, Helmut, Masch. Ing.-grad.
Auf der Breite 22
D-4772 Bad Sassendorf (DE)

(74) Vertreter : Habbel, Hans-Georg, Dipl.-Ing.
Postfach 3429 Am Kanonengraben 11
D-4400 Münster (DE)

## Beschreibung

Die Erfindung bezieht sich auf eine Maschine zum pneumatischen Ausbringen von körnigen Stoffen, vorzugsweise auf landwirtschaftlichen Nutzflächen gemäß dem Oberbegriff des Hauptanspruches.

Aus der FR-A-14 27 107 ist ein Düngerstreuer für landwirtschaftliche Betriebe bekanntgeworden, bei welchem durch ein Gebläse Dünger über einen zentralen Verteiler pneumatisch ausgetragen wird. Die Düse des Verteilers hat eine in Strömungsrichtung sich stark erweiternde Breite, wobei die Höhe des Strömungsquerschnittes sich laufend derart verjüngt, daß die Strömungsquerschnitte in dem Verteiler vom Eintritt bis zum Austritt konstant bleiben. In einer Zweiphasenströmung, z. B. Luft mit Düngergranulat, ist keine gleichmäßige Verteilung der Granulate in der Luft zu erreichen, so daß sich bei der bekannten Anordnung Granulatsträhnen bilden, die auch durch Führungsbleche kaum ausgeglichen werden können, da im Austrittsquerschnitt der Abstand der Führungsbleche naturgemäß relativ groß ist. Der Granulatstrom liegt eng an den Führungsblechen an und die Düngersträhnen können auch in der weiteren Flugbahn durch die Luft nicht genügend aufgefächert werden, so daß eine ungleichmäßige Bedeckung des Bodens bedingt wird. Außerdem ist mit dieser Ausführung nur ein zentral gelegener Verteiler in der Mitte der Streubreite der Maschine möglich. Bei den üblichen Korngrößen von Mineraldünger ist dabei jedoch nur eine Arbeitsbreite von 4 bis 6 m möglich. Feinkörnige Dünger können wegen der geringen Flugweite und aufgrund des Luftwiderstandes schlecht verteilt werden.

Eine gattungsgemäße Maschine ist aus der DE-B-27 18 841 bekanntgeworden, wobei diese Maschinen für große Breiten geeignet sind. Die Maschinen sind mit einer Vielzahl von quer zur Fahrtrichtung verlaufenden Rohren und daran anschließenden Verteilerkrümmern ausgerüstet und bringen den granulierten Dünger relativ gleichmäßig und mit konstanter Streubreite aus. Die Streubreite der Verteilerkrümmer liegt dort bei etwa 1 bis 2 m, so daß bei einer Maschine mit 12 m Arbeitsbreite 16 bis 18 Förderrohre mit entsprechenden Verteilern notwendig sind, um eine ausreichende Überlappung zu gewährleisten.

In der DE-A-26 16 112 werden die den Verteilerkrümmer bildenden Einzelbögen nach unten gerichtet angeordnet, so daß eine Führung des Gutes in Richtung des Bodens erfolgt. Bei der Einrichtung gemäß der DE-B-27 18 841 münden die Einzelbögen des Verteilerkrümmers in einer waagerechten Ebene, liegen aber übereinander angeordnet und sind mit Prallplatten ausgerüstet. Die Einzelbögen weisen unterschiedliche Krümmungsradien auf. Diese Ausführung hat den Nachteil, daß die übereinander angeordneten Einzelbögen unterschiedliche Granulatmengen aus dem Gesamtförderrohr abnehmen, da in der unteren Rohrhälfte 2/3 bis 3/4 der gesamten Granulatmenge strömt. In der Überlappung ergeben die mehreren, ungleichgroßen Teilströme der Bögen dann naturgemäß eine asymmetrische Verteilungskurve pro Verteilerrohr, so daß, um diesen Nachteil möglichst aufzuheben, bei der bekannten Vorrichtung die Notwendigkeit besteht, relativ kleine Abstände der Verteilerkrümmer zueinander vorzusehen, so daß dadurch die große Anzahl der Förderrohre notwendig wird. Um diese große Anzahl von Rohrleitungen zu vermeiden, weisen in der DE-A-27 55 353 die Einzelbögen unterschiedliche Umlenkwinkel auf.

Der Erfindung liegt die Aufgabe zugrunde, eine Maschine zum pneumatischen Ausbringen von körnigen Stoffen zu schaffen, die nur wenige große Förderrohre aufweist, eine große Streubreite sicherstellt und trotzdem ein gleichmäßiges Verteilungsbild des ausgetragenen körnigen Stoffes erreicht.

Diese der Erfindung zugrundeliegende Aufgabe wird durch die Merkmale des kennzeichnenden Teiles des Hauptanspruches gelöst.

Durch die erfindungsgemäße Ausbildung ergibt sich der Vorteil, daß durch Wahl der Umlenkwinkel der einzelnen Einzelbögen ein gewünschter Gesamtstreuwinkel des Streufächers erreicht werden kann, der eine optimale Überdeckung der Randbereiche ergibt. Durch Wahl der Anzahl der Einzelbögen kann der Gesamtstreuwinkel variiert werden. Schließlich kann durch eine unterschiedliche Teilung der Eintrittsöffnungen der Einzelbögen die Menge für die seitlichen bzw. mittleren Einzelbögen beeinflußt werden. Bei gleicher Teilung der Einzelbögen erhalten die mittleren Bögen mehr Granulatmenge als die seitlichen äußeren, was für eine gute Überlappung des Streufächers erwünscht ist.

Durch die Möglichkeit, nur wenige Förderrohre mit großem Querschnitt einzusetzen, die unmittelbar bis zu den Verteilerkrümmern führen, ergeben sich geringe Strömungsverluste. Weiterhin haben die großen Förderrohre den Vorteil, daß sie selbsttragend ausgebildet werden können, so daß kein zusätzlicher Tragrahmen für die Förderleitungen erforderlich ist. Bei einer maximalen Straßentransportbreite von 3 m braucht nur eine einzige Förderleitung links und rechts eingeklappt zu werden. Die geringe Anzahl von Förderleitungen hat weiterhin den Vorteil, daß zusätzliche Dosierelemente, Rührwerke usw. eingespart werden können.

Gemäß der Erfindung kann weiterhin ein Stromteiler vorgesehen werden, der als Übergangsstück vom kreisförmigen oder quadratischen oder ähnlichen Rohrleitungsquerschnitt zu einem breiteren, flachen Querschnitt am Ende ausgebildet ist, an das sich der Verteilerkrümmer anschließt. Hierbei kann der Ausgangsquerschnitt des Stromteilers symmetrisch zur bisherigen Rohrachse verlaufen, er kann aber auch schräg nach oben oder unten gerichtet sein. In einem solchen Fall ergibt sich durch Aufprallen des Granulatstroms auf die untere oder obere Deckfläche des Stromteilers innerhalb eines kurzen Strömungsweges eine Verteilung des durch die große Masse trägen Granulatstromes auf einen breiteren Ausgangsquerschnitt.

Gemäß der Erfindung wird dabei vorgeschlagen, daß der Ausgangsquerschnitt des Stromteilers um soviel von der Rohrleitungsachse nach oben oder unten hin versetzt wird, daß auch Partikel, die nahe der oberen oder unteren Rohrwandung strömen, auf jeden Fall erst auf die entsprechende Deckfläche des Stromteilers prallen und nicht ohne Berührung in den eigentlichen Verteilerkrümmer eintreten können. Durch entsprechende Neigung des Stromteilers kann dabei erreicht werden, daß die mittleren Schaufelkanäle weniger und die seitlich äußeren mehr Granulat erhalten. So ist es möglich, eine steilere oder flachere Verteilungskurve des Granulats zu erreichen.

Schließlich wird gemäß der Erfindung noch vorgeschlagen, daß vor dem Stromteiler ein Stromrichter eingeschaltet wird, der verhindert, daß der Granulat-Luftstrom einseitig eingespeist wird. Insbesondere bei kreisförmigen Rohrleitungen, die an sich üblich sind, kommt es leicht zu einer asymmetrischen Strömung bezogen auf die Granulatachse bzw. erhält der Granulatstrom einen Drall und strömt in schwachen Schraubenlinien sich drehend um die Rohrachse. Durch Flachdrücken eines Rohrleitungsbereiches wird ein solcher Stromrichter geschaffen und gleichzeitig die Strömung zentriert und der Drall gleichgerichtet.

Ein Ausführungsbeispiel der Erfindung wird nachfolgend anhand der Zeichnungen erläutert. Die Zeichnungen zeigen dabei in

Figur 1 ganz schematisch eine Ansicht auf eine erfindungsgemäße Maschine, in

Figur 2 eine Draufsicht auf die Anordnung gemäß Fig. 1, in

Figur 3 in größerem Maßstab eine Seitenansicht des Endteiles eines Zuführrohres, in

Figur 4 in Draufsicht teilweise weggebrochen die Vorrichtung gemäß Fig. 3 und in

Figur 5 in einer Einzeldarstellung einen Verteilerkrümmer gemäß der Erfindung.

In den Zeichnungen ist mit 1 ein Vorratsbehälter bezeichnet, an dem beispielsweise ein Gebläse 2 angeordnet ist, das mit aus dem Vorratsbehälter auszutragendem Gut Rohrleitungen 3, 4, 5 und 6 beschickt, an deren Enden Verteilerkrümmer 7 angeordnet sind. Bei dem dargestellten Ausführungsbeispiel sind die äußeren Rohrleitungen 3 und 6 über entsprechende Halterungsvorrichtungen mit dem Vorratsbehälter verbunden. Der Verteilerkrümmer (7) kann um eine vertikale Achse schwenkbar einstellbar sein.

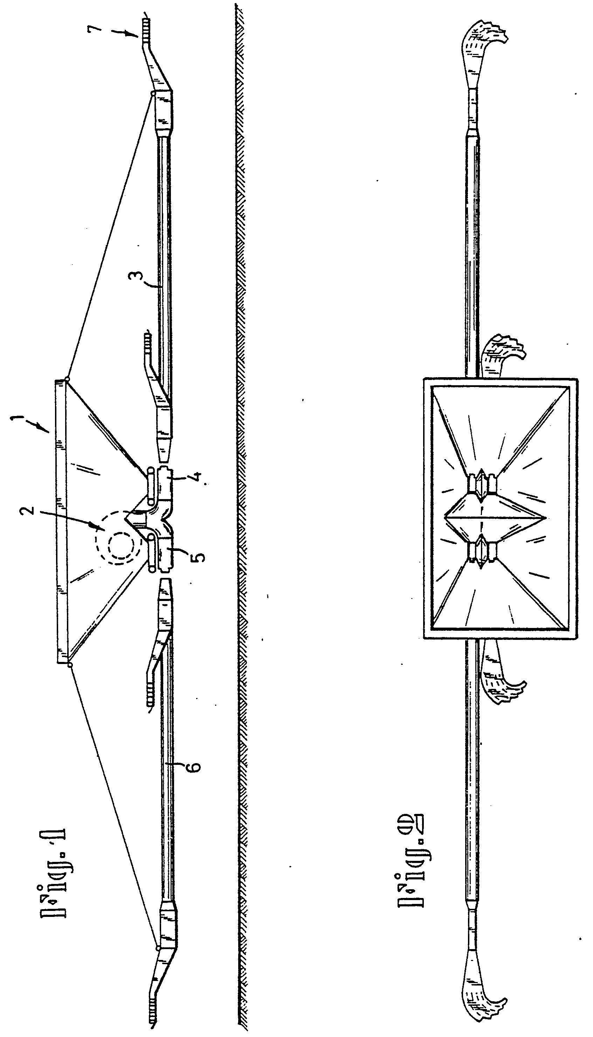

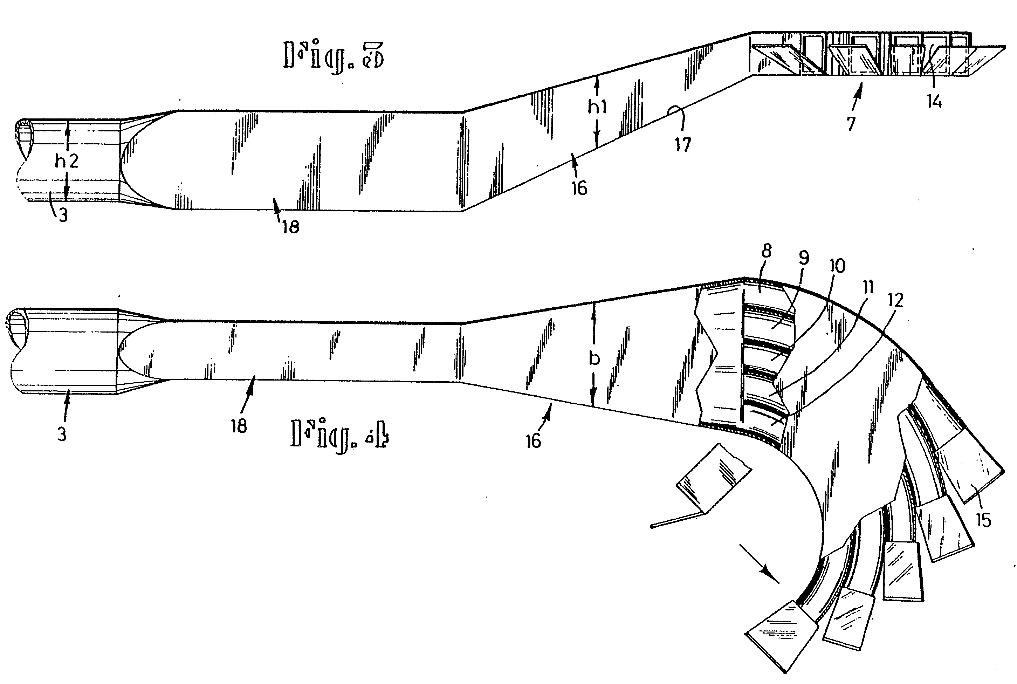

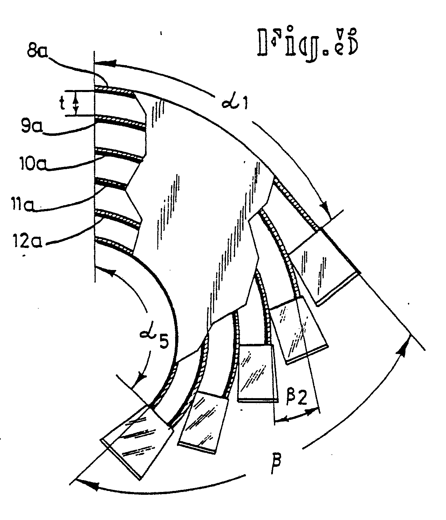

In den Fig. 3 und 4 ist in größerem Maßstab das Ende einer Rohrleitung, beispielsweise der Rohrleitung 3 mit einem Verteilerkrümmer 7 dargestellt. Der Verteilerkrümmer 7 besteht dabei bei dem dargestellten Ausführungsbeispiel aus Einzelbögen 8, 9, 10, 11 und 12, deren Wandungen als Leitschaufeln 8a, 9a, 10a, 11a und 12a ausgebildet sind und die jeweils mit einer Ausströmöffnung 14 versehen sind, wobei vor diesen Ausströmöffnungen 14 Prallplatten 15 angeordnet sein können, und zwar für jeden Einzelbogen 8 bis 12 jeweils eine einzelne Prallplatte 15. Die Wandungen der Leitschaufeln teilen die Mündung des Rohres gitterartig und reichen bis an die Rohrmündung dicht heran. Hier erfolgt also eine abrupte Unterteilung des Gutstromes, der im Rohr 3 fließt.

Wie Fig. 5 deutlicher zeigt, weisen die Einzelbögen 8 bis 12 unterschiedliche Umlenkwinkel $\alpha 1$ bis $\alpha 5$ auf, wodurch ein gesamter Streuwinkel $\beta$ erzielt wird, der entsprechend groß gewählt werden kann. Jede Ausströmöffnung 14 weist in Abhängigkeit von der Größe der Öffnung einen Einzelstreuwinkel $\beta 2$ auf, wobei durch die Prallplatten 15, die einzeln schräg nach oben gerichtet angeordnet sind, erreicht wird, daß die Granulatströme der Einzelbögen 8 bis 12 sich untereinander weiter überdecken. Es werden besonders bei großen Fördermengen bzw. großen Gutbeladungen (Granulatmenge pro sec. im Verhältnis zu Luftmenge pro sec.) Strähnenbildungen verhindert und Spitzenabweichungen im Streudiagramm geglättet bzw. ausgeglichen.

Vor jedem Verteilerkrümmer 7 ist ein Stromteiler 16 angeordnet, der gegenüber der Rohrachse bei dem in Fig. 3 dargestellten Ausführungsbeispiel derart nach oben gerichtet ist, daß sichergestellt wird, daß auch sich am oberen Innenrand der Rohrleitung 3 bewegende Granulatteilchen auf die Bodenseite 17 des Stromteilers 16 geführt werden und hier aufprallen, so daß eine Auflösung ggf. vorhandener Strähnen mit Sicherheit erreicht wird. Der Stromteiler ist in seiner Höhenlage verstellbar zwischen der Rohrleitung 3 und dem Verteilerkrümmer 7.

Aus Fig. 3 ist weiterhin ersichtlich, daß der Stromteiler 16 eine geringere Höhe h1 als die Höhe h2 der Rohrleitung 3 aufweist, aber eine größere Breite b (Fig. 4) als die Breite der Rohrleitung, so daß im wesentlichen der gleiche Volumenquerschnitt beibehalten wird.

Vor dem Stromteiler 16 ist ein Stromrichter 18 angeordnet, der dafür Sorge trägt, daß der Granulatstrom, der auf das Gitter des Verteilerkrümmers mündet, möglichst symmetrisch verteilt ist. Der durch den Stromrichter 18 gebildete flachgedrückte Teil der Rohrleitung 3 bewirkt, daß innerhalb der Leitung eine einseitige Strömung zentriert bzw. ein im Granulatstrom vorhandener Drall gleichgerichtet wird.

Fig. 4 macht besonders gut deutlich, daß die Einzelbögen 8 bis 12 des Verteilerkrümmers 7 nebeneinander in einer waagerechten Ebene angeordnet sind, und es ist ersichtlich, daß die so gebildeten Kanäle der Einzelbögen den Gesamtstrom, der aus dem Förderrohr austritt, aufteilen und in unterschiedliche Ausströmrichtungen leiten, so daß sich eine fächerförmige Aufteilung der Ströme ergibt. Die Ausströmöffnungen 14 der Einzelbögen 8 bis 12 liegen dabei im wesentlichen parallel zur Bodenoberfläche, wobei die Prallplatten 15 schräg nach oben gerichtet sein können.

Aus Fig. 5 ist ersichtlich, daß bei dem dargestellten Ausführungsbeispiel alle Einzelbögen 8 bis 12 gleiche Teilung t aufweisen. Es kann aber auch zweckmäßig sein, hier unterschiedliche Teilungen vorzusehen, um dadurch unterschiedlichen Granulatströmen in der Zuführungsleitung Rechnung zu tragen.

## Patentansprüche

1. Maschine zum pneumatischen Ausbringen von körnigen Stoffen, vorzugsweise auf landwirtschaftlichen Flächen, mit einem Vorratsbehälter (1), einer Anzahl von mit einem Gebläse (2) verbundenen Rohrleitungen (3-6), an deren Enden Verteilerkrümmer (7) im Abstand quer zur Fahrtrichtung angeordnet und annähernd waagerecht ausgerichtet mit als Einzelbögen ausgebildeten, entgegen der Fahrtrichtung sich öffnenden und in verschiedenen vertikalen Ebenen angeordneten Ausströmöffnungen versehen sind, dadurch gekennzeichnet, daß die Einzelbögen (8-12) jedes Verteilerkrümmers (7) in einer waagerechten Ebene nebeneinander angeordnet sind und in an sich bekannter Weise unterschiedliche Umlenkwinkel ($\alpha$1 bis $\alpha$5) aufweisen.

2. Maschine nach Anspruch 1, dadurch gekennzeichnet, daß die Wandungen der Einzelbögen (8-12) als Leitschaufeln (8a-12a) ausgebildet den Querschnitt der Mündung der zugeordneten Rohrleitung (3) gitterartig unterteilen.

3. Maschine nach den Ansprüchen 1 und 2, dadurch gekennzeichnet, daß die einzelnen Verteilerkrümmer (7) einer Maschine eine unterschiedliche Anzahl von Einzelbögen (8-12) aufweisen.

4. Maschine, zumindest nach Anspruch 1, dadurch gekennzeichnet, daß die Größe der Eintrittsöffnungen der Einzelbögen (8-12) eines Verteilerkrümmers (7) unterschiedlich gestaltet ist.

5. Maschine nach den Ansprüchen 1 bis 4, dadurch gekennzeichnet, daß vor den Ausströmöffnungen (14) der Einzelbögen (8-12) der Verteilerkrümmer (7) Prallplatten (15) angeordnet sind.

6. Maschine nach Anspruch 5, dadurch gekennzeichnet, daß jedem Einzelbogen (8-12) eine eigene Prallplatte (15) zugeordnet ist.

7. Maschine, zumindest nach Anspruch 1, dadurch gekennzeichnet, daß der Verteilerkrümmer (7) um eine vertikale Achse schwenkbar einstellbar ist.

8. Maschine, zumindest nach Anspruch 1, dadurch gekennzeichnet, daß zwischen der Rohrleitung (3) und dem Verteilerkrümmer (7) ein Stromteiler (16) angeordnet ist, der eine geringere Höhe (h1) als die Höhe (h2) der Rohrleitung (3), aber eine größere Breite (b) als die Breite der Rohrleitung (3) aufweist.

9. Maschine nach Anspruch 8, dadurch gekennzeichnet, daß der Ausgang des Stromteilers (16) mit der Mittelachse der Rohrleitung (3) fluchtet.

10. Maschine nach Anspruch 8, dadurch gekennzeichnet, daß die Mittelachse des Stromteilers (16) gegenüber der Mittelachse der Rohrleitung schräg nach oben oder unten gerichtet angeordnet ist.

11. Maschine nach den Ansprüchen 8 und 10, dadurch gekennzeichnet, daß in Abhängigkeit von der Neigung des Stromteilers (16) nach oben oder unten gegenüber der mittleren Achse der Rohrleitung die untere Fläche (17) des Stromteilers im Bereich des Ausganges zum Verteilerkrümmer höher liegt als die Oberkante der Rohrleitung oder die obere Wandung des Stromteilers im Bereich des Ausgangs vor dem Verteilerkrümmer tiefer liegt als die untere Wandung der Rohrleitung.

12. Maschine nach einem oder mehreren der vorhergehenden Ansprüche 8-11, dadurch gekennzeichnet, daß der Stromteiler (16) in seiner Höhenlage verstellbar zwischen der Rohrleitung (3) und dem Verteilerkrümmer (7) ausgebildet ist.

13. Maschine nach einem oder mehreren der vorhergehenden Ansprüche 8-12, dadurch gekennzeichnet, daß zwischen dem Stromteiler (16) und der Rohrleitung (3) ein Stromrichter (18) eingeschaltet ist.

14. Maschine nach Anspruch 13, dadurch gekennzeichnet, daß der Stromrichter (18) im Fall einer einen runden Querschnitt aufweisenden Rohrleitung (3) als flaches, rechteckiges Bauteil ausgebildet ist, das eine Kanalöffnung gleichen Querschnitts wie die Kanalöffnung der Rohrleitung aufweist.

## Claims

1. Machine for the pneumatic ejection of granular material, preferably on agricultural land, with a supply container (1), a plurality of conduits (3-6) which are connected to a fan (2) and at the ends of which curved distributors (7) are arranged at intervals transversely to the direction of travel, these being aligned approximately horizontally and having outlet apertures which are constructed as individual arcuate ducts and which open in the direction opposite to the direction of travel and are arranged in different vertical planes, characterised in that the individual arcuate ducts (8-12) of each curved distributor (7) are arranged adjacent one another in a horizontal plane, and in a manner known *per se* have different deflection angles ($\alpha$1 to $\alpha$5).

2. Machine according to claim 1, characterised in that the walls of the individual arcuate ducts (8-12) are constructed as guide vanes (8a-12a) and sub-divide like a grid the cross-section of the mouth of the associated conduit (3).

3. Machine according to claims 1 and 2, characterised in that the individual curved distributors (7) of a machine have different numbers of individual arcuate ducts (8-12).

4. Machine, at least according to claim 1, characterised in that the inlet apertures of the

7 0 085 766 8

individual arcuate ducts (8-12) of a curved distributor (7) are made of different sizes.

5. Machine according to claims 1 to 4, characterised in that baffle plates (15) are arranged before the outlet apertures (14) of the individual arcuate ducts (8-12) of the curved distributors (7).

6. Machine according to claim 5, characterised in that a baffle plate (15) of its own is associated with each individual arcuate duct (8-12).

7. Machine, at least according to claim 1, characterised in that the curved distributor (7) is adjustable pivotably about a vertical axis.

8. Machine, at least according to claim 1, characterised in that between the conduit (3) and the curved distributor (7) there is arranged a flow distribution promoter (16) which is of a lower height (h1) than the height (h2) of the conduit (3), but is of a greater width (b) than the width of the conduit (3).

9. Machine according to claim 8, characterised in that the outlet of the flow distribution promoter (16) is in alignment with the centre axis of the conduit (3).

10. Machine according to claim 8, characterised in that the centre axis of the flow distribution promoter (16) is directed upwardly or downwardly at an inclination with respect to the centre axis of the conduit.

11. Machine according to claims 8 and 10, characterised in that in dependence on the inclination of the flow distribution promoter (16) upwardly or downwardly relatively to the centre axis of the conduit the lower surface (17) of the flow distribution promoter in the region of the exit to the curved distributor is situated higher than the upper edge of the conduit or the upper wall of the flow distribution promoter in the region of the exit upstream of the curved distributor is situated lower than the lower wall of the conduit.

12. Machine according to one or more of the preceding claims 8-11, characterised in that the flow distribution promoter (16) is made adjustable as regards its position in the vertical sense between the conduit (3) and the curved distributor (7).

13. Machine according to one or more of the preceding claims 2-12, characterised in that a flow corrector (18) is interposed between the flow distribution promoter (16) and the conduit (3).

14. Machine according to claim 13, characterised in that the flow corrector (18), in the event of the conduit (3) having a round cross-section, is constructed as a flat rectangular part which has a passage opening of the same cross-section as the passage opening of the conduit.

## Revendications

1. Machine pour éjecter pneumatiquement des matériaux granulaires, de préférence sur des surfaces agricoles, comprenant un réservoir (1), un certain nombre de conduits tubulaires (3 à 6) reliés à un ventilateur (2), aux extrémités desquelles des renvois distributeurs coudés (7), qui sont disposés transversalement à la direction de la marche et orientés à peu près horizontalement, sont munis d'ouvertures de sortie, réalisées sous la forme de coudes élémentaires, qui s'ouvrent en sens inverse du sens de la marche et sont disposées dans différents plans verticaux, caractérisée en ce que les coudes élémentaires (8 à 12) de chaque renvoi distributeur coudé (7) sont disposés les uns à côté des autres dans un même plan horizontal et présentent, d'une façon connue en soi, différents angles de changement de direction (α1 à α5).

2. Machine selon la revendication 1, caractérisée en ce que les parois des coudes élémentaires, qui constituent des déflecteurs (8a à 12a), divisent la section de la bouche du conduit tubulaire correspondant (3) à la façon d'une grille.

3. Machine selon les revendications 1 et 2, caractérisée en ce que les différents renvois distributeurs coudés (7) d'une même machine présentent différents nombres de coudes élémentaires (8 à 12).

4. Machine, au moins selon la revendication 1, caractérisée en ce que les dimensions des ouvertures d'entrée des coudes élémentaires (8 à 12) d'un renvoi distributeur coudé (17) sont de différentes valeurs.

5. Machine selon les revendications 1 à 4, caractérisée en ce que des chicanes déflectrices (15) sont disposées devant les ouvertures de sortie (14) des coudes élémentaires (8 à 12) des renvois distributeurs coudés (7).

6. Machine selon la revendication 5, caractérisée en ce qu'à chaque coude élémentaire (8 à 12) est associée une chicane déflectrice (15) qui lui est propre.

7. Machine, au moins selon la revendication 1, caractérisée en ce que le renvoi distributeur coudé (7) est réglable par pivotement autour d'un axe vertical.

8. Machine, au moins selon la revendication 1, caractérisée en ce qu'entre le conduit tubulaire (3) et le renvoi distributeur coudé (7), est interposé un diviseur de flux (16) qui présente une hauteur (h1) inférieure à la hauteur (h2) du conduit tubulaire (3) mais possède une largeur (b) plus grande que la largeur du conduit tubulaire (3).

9. Machine selon la revendication 8, caractérisée en ce que la sortie du diviseur de flux (16) est alignée sur l'axe médian du conduit tubulaire (3).

10. Machine selon la revendication 8, caractérisée en ce que l'axe médian du diviseur de flux (16) est disposé orienté obliquement vers le haut ou vers le bas par rapport à l'axe central du conduit tubulaire.

11. Machine selon les revendications 8 et 10, caractérisée en ce que, selon l'inclinaison du diviseur de flux (16), vers le haut ou vers le bas, par rapport à l'axe médian du conduit tubulaire, soit la surface inférieure (17) du diviseur de flux se trouve dans la région de la sortie donnant sur le renvoi distributeur coudé à un niveau supérieur à celui du bord supérieur du conduit tubulaire,

5

soit dans la région de la sortie en amont du renvoi distributeur coudé, la paroi supérieure du diviseur de flux se trouve plus bas que la paroi inférieure du conduit tubulaire.

12. Machine selon une ou plusieurs des revendications précédentes 8 à 11, caractérisée en ce que le diviseur de flux (16) est réalisé réglable en niveau entre le conduit tubulaire (3) et le renvoi distributeur coudé (7).

13. Machine selon une ou plusieurs des revendications précédentes 8 à 12, caractérisée en ce qu'un redresseur de flux (18) est intercalé entre le diviseur de flux (16) et le conduit tubulaire (3).

14. Machine selon la revendication 13, caractérisée en ce que, dans le cas d'un conduit tubulaire (3) possédant une section ronde, le redresseur de flux (18) est constitué par un élément rectangulaire plat qui présente une lumière de même section que la lumière du conduit tubulaire.

Fig. 1

Fig. 2

0 085 766

Fig. 5

Fig. 4

0 085 766

Fig. 5